# EUROPEAN PATENT SPECIFICATION

(11) **EP 3 706 040 B1**
(45) Date of publication and mention of the grant of the patent: **14.09.2022**
(21) Application number: 20161362.7
(22) Date of filing: 06.03.2020
(51) Int. Cl.: G06K 9/00, G02F 1/1335

(54) **UNDER-DISPLAY SENSING DEVICE**
MESSVORRICHTUNG UNTER EINER ANZEIGE
DISPOSITIF DE DÉTECTION DE SOUS-AFFICHAGE

(30) Priority: 08.03.2019 TW 108107736
(43) Date of publication of application: 09.09.2020
(73) Proprietor: Macroblock, Inc., Hsinchu 30072 (TW)
(72) Inventor: LIN, Yi-Sheng, 30072 Hsinchu (TW)
(74) Representative: Brevalex

(56) References cited:
- WO-A1-2019/233332
- CN-A- 109 154 961
- CN-U- 208 547 957
- US-A1- 2019 012 512

## Description

The disclosure relates to a sensing device, and more particularly to an under-display sensing device.

Fingerprint is commonly used in electronic devices for verification or authentication of personal identity. It is desirable to have quick and accurate recognition of the fingerprint. Among many sensing techniques that have been widely developed, under-display sensing is one of the promising techniques used in fingerprint recognition. Sensing device utilizing such technique includes a fingerprint sensing module that is disposed under a touch screen. However, the position of the fingerprint sensing module in this type of sensing device makes the sensing light easily interfered or influenced by the touch screen, resulting in low sensitivity, low resolution and slow recognizing speed.

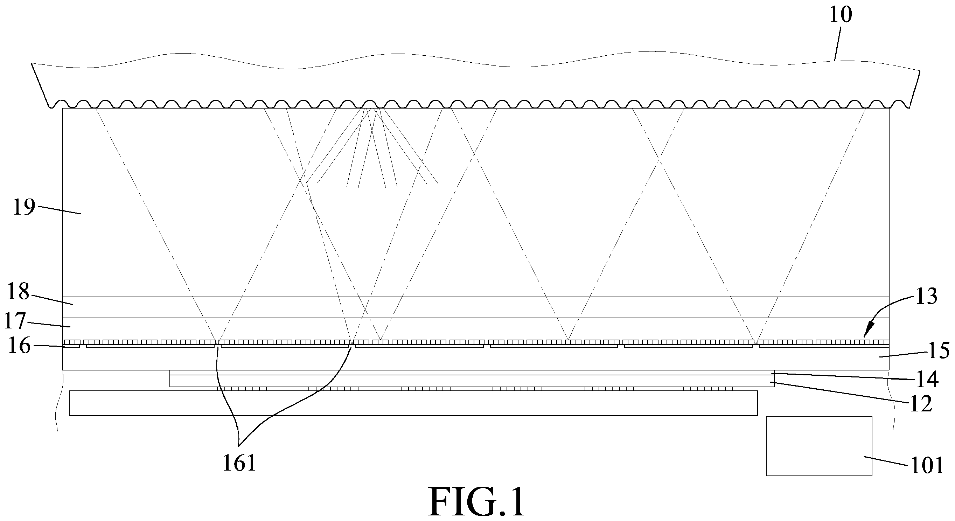

Referring to FIG. 1, a conventional under-display sensing device for generating three dimensional fingerprinting data is disclosed in U.S. Invention Patent Application Publication No. 2018/0225498 A1. The sensing device includes an array of pixels 13 serving as a light source, an optical image sensor 12 disposed under the pixels 13, a first optically clear adhesive (OCA) layer 14 disposed above the optical image sensor 12, a transparent support member 15 disposed above the first OCA layer 14, a pin hole array mask layer 16 spaced from the optical image sensor 12 by the transparent support member 15 and disposed under the pixels 13, a display encapsulation layer 17 covering the pixels 13, a second OCA layer 18 disposed over the display encapsulation layer 17, a transparent cover layer 19 disposed over the second OCA layer 18 and defining a finger placement surface, and optionally a light source 101 for directing light into a user's finger 10 or directing light to the optical image sensor 12. In particular, the pin hole array mask layer 16 has a plurality of openings 161 to permit light passing therethrough. Upon the user's finger 10 contacting the finger placement surface, a light from the pixels 13 is reflected by the finger 10, then passes through the openings 161 of the pin hole array mask layer 16, and finally is captured by the optical image sensor 12 for sensing. The image resolution may be controlled by adjusting the spacing between the openings 161, the diameter of each opening 161, and the thickness of the transparent support member 15 and the transparent cover layer 19, thereby increasing the resolution of the fingerprinting data. Moreover, the pin hole array mask layer 16 may further include lenses (not shown in FIG. 1) in the openings 161 to improve image quality and signal-to-noise ratio (SNR).

Other documents are known by the man skilled in the art, including:
- US 2019/012512, which discloses multi-layer optical designs of under-screen optical sensor module having spaced optical collimator array and optical sensor array for on-screen fingerprint sensing;
- CN 109 154 961, which discloses optical fingerprint sensing based on LCD screens using optical imaging using lens-pinhole modules and other optical designs;
- CN 208 547 957, which discloses micro fill light illumination system for screen fingerprint recognition module; and
- WO 2019/233332, which discloses optical fingerprint recognition assembly and terminal.

Despite the rapid development of fingerprint recognition, there is still a need for further improvement of the sensitivity of fingerprint sensing device.

Therefore, an object of the disclosure is to provide an under-display sensing device that can alleviate at least one of the drawbacks of the prior art.

The under-display sensing device of this disclosure includes a liquid crystal display (LCD) module which includes an LCD unit, an optical filter unit and an optical sensing unit. The LCD unit has a display surface and a backlight unit disposed at a side opposite to the display surface for emitting a light. The optical filter unit is disposed on the backlight unit at a side opposite to the LCD unit for filtering the light to obtain a filtered light having predetermined wavelengths. The optical sensing unit is disposed on the optical filter unit at a side opposite to the backlight unit for detecting the filtered light from the optical filter unit.

The optical filter unit includes an optical filter that is disposed between the backlight unit and the optical sensing unit for filtering the light.

Besides, the optical sensing unit includes a plurality of optical sensing chips, and the optical filter is formed on and covers the optical sensing chips of the optical sensing unit.

Other features and advantages of the disclosure will become apparent in the following detailed description of the embodiments with reference to the accompanying drawings, of which:
FIG. 1 is a schematic cross sectional view illustrating a conventional under-display sensing device;
FIG. 2 is a schematic cross sectional view illustrating a first example of an under-display sensing device useful for understanding the invention;
FIG. 3 is a schematic cross sectional view illustrating a first embodiment of the under-display sensing device according to the disclosure;
FIG. 4 is a schematic cross sectional view illustrating a second embodiment of the under-display sensing device according to the disclosure; and
FIG. 5 is a schematic cross sectional view illustrating a third embodiment of the under-display sensing device according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

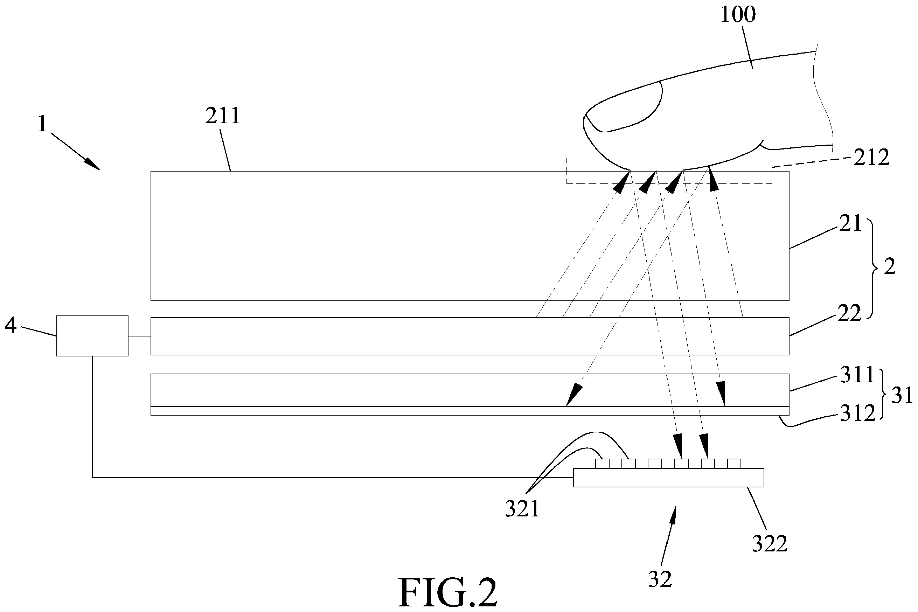

Referring to FIG. 2, an under-display sensing device 1 senses a biometric object 100 (such as a finger), and includes a liquid crystal display (LCD) module 2, an optical filter unit 31, an optical sensing unit 32 and a circuit control module 4. The LCD module 2, the optical filter unit 31, the optical sensing unit 32 and the circuit control module 4 of the under-display sensing device 1 are integrated into a housing (not shown in the figure).

The LCD module 2 includes an LCD unit 21 having a display surface 211, and a backlight unit 22 disposed at a side opposite to the display surface 211 for emitting a light. The display surface 211 of the LCD unit 21 has a sensing region 212 for recognizing the biometric object 100. Taking mobile phone as an example, the sensing region 212 maybe a region of the home button for fingerprint recognition of the biometric object 100. It should be noted that the LCD module 2 may be a conventional LCD and is well known to a person skilled in the art, and thus a detailed description of the structure thereof is omitted herein for brevity.

The optical filter unit 31 is disposed on the backlight unit 22 at a side opposite to the LCD unit 21 for filtering the light to obtain a filtered light having predetermined wavelengths. The optical sensing unit 32 is disposed on the optical filter unit 31 at a side opposite to the backlight unit 22 for detecting the filtered light from the optical filter unit 31.

The optical filter unit 31 includes a transparent substrate 311 disposed under the backlight unit 22, and an optical filter 312 disposed between the backlight unit 22 and the optical sensing unit 32 for filtering the light. Alternatively, the transparent substrate 311 may be omitted in the optical filter unit 31, and the optical filter 312 is formed on a surface of the backlight unit 22 opposite to the LCD unit 21. To have more light reaching the optical sensing unit 32, the optical filter unit 31 has a transmittance of not lower than 60%.

In one example, the transparent substrate 311 is a transparent plate or a transparent circuit board. In one example, the optical filter 312 is a band-pass filter which transmits light having wavelengths within a specific range and blocks light having wavelengths outside the specific range. The optical filter 312 may be made of any suitable material capable of absorbing light having specific wavelengths, and may include stacked optical films having different refractive indices and thicknesses depending on the passband, stopband and spectrum of the light to be filtered. Since the design of the optical films of the band-pass filter is well known to those skilled in this art, a detailed description thereof is omitted herein for brevity.

In certain embodiments, for better control of the sensitivity of the optical sensing unit 32, the optical filter 312 is designed to permit green light (i.e., having a wavelength ranging from 480 nm to 570 nm) to pass therethrough.

In certain embodiments, a projection of the optical filter unit 31 on the backlight unit 22 completely or partially covers the backlight unit 22. That is, the projection of the optical filter unit 31 may have the same size as the backlight unit 22, or may be located at a portion of the backlight unit 22 that corresponds in position to a particular region such as the sensing region 212 on the LCD unit 21. In this embodiment, the projection of the optical filter unit 31 completely covers the backlight unit 22, but is not limited thereto.

In certain embodiments, the optical sensing unit 32 includes a circuit board 322, a plurality of optical sensing chips 321 disposed on the circuit board 322, and a plurality of film transistors (not shown) electrically connected to the optical sensing chips 321. The optical sensing chips 321 may be one of a charge coupled device (CCD) and a complementary metal-oxide semiconductor (CMOS). The film transistors are communicatively connected to the circuit control module 4 via the circuit board 322 and may control the signal transmission of the optical sensing chips 321 via the circuit control module 4.

In certain embodiments, a projection of the optical sensing unit 32 on the optical filter unit 31 completely or partially covers the optical filter unit 31. That is, the projection of optical sensing unit 32 on the optical filter unit 31 may have the same size as the optical filter unit 31 or may be located at a portion of the optical filter unit 31 that corresponds in position to a particular region such as the sensing region 212 on the LCD unit 21.

In certain embodiments, a projection of the optical sensing unit 32 on the backlight unit 22 falls within the backlight unit 22. That is, the projection of the optical sensing unit 32 on the backlight unit 22 is smaller in size than the backlight unit 22.

The circuit control module 4 is communicatively connected to the optical sensing unit 32 and may include a first control circuit (not shown) for controlling the signal transmission of the optical sensing unit 32. The circuit control module 4 may be further communicatively connected to the backlight unit 22 through a second control circuit (not shown) for controlling the signal transmission of the backlight unit 22.

In use, when the user's finger 100 approaches or touches the sensing region 212 on the LCD unit 21, the light emitted from the backlight unit 22 toward the finger 100 will be reflected by the finger 100 and reaches the optical filter unit 31. The reflected light passes through the optical filter unit 31 to filter out undesirable wavelengths of light and generate a filtered light having predetermined wavelengths, which is then captured and sensitively detected by the optical sensing unit 32. Therefore, the sensitivity of the optical sensing chips 321 of the optical sensing unit 32 can be greatly improved.

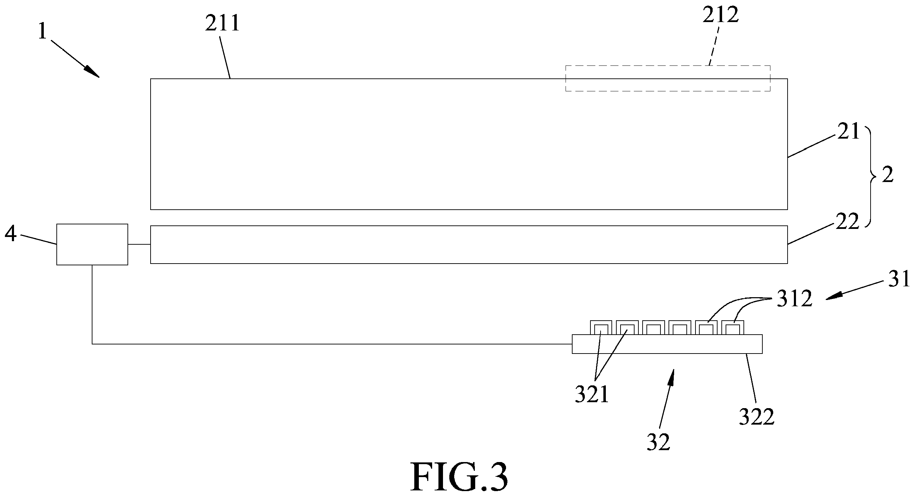

Referring to FIG. 3, a first embodiment of the under-display sensing device 1 is similar to the first example of an under-display sensing device except for the optical filter unit 31. To be specific, in the first embodiment, the optical filter unit 31 is free of the transparent substrate 311, and the optical filter 312 is formed on and covers the optical sensing chips 321 of the optical sensing unit 32. In this way, the light lost in traveling from the optical filter unit 31 to the optical sensing chips 321 can be effectively reduced.

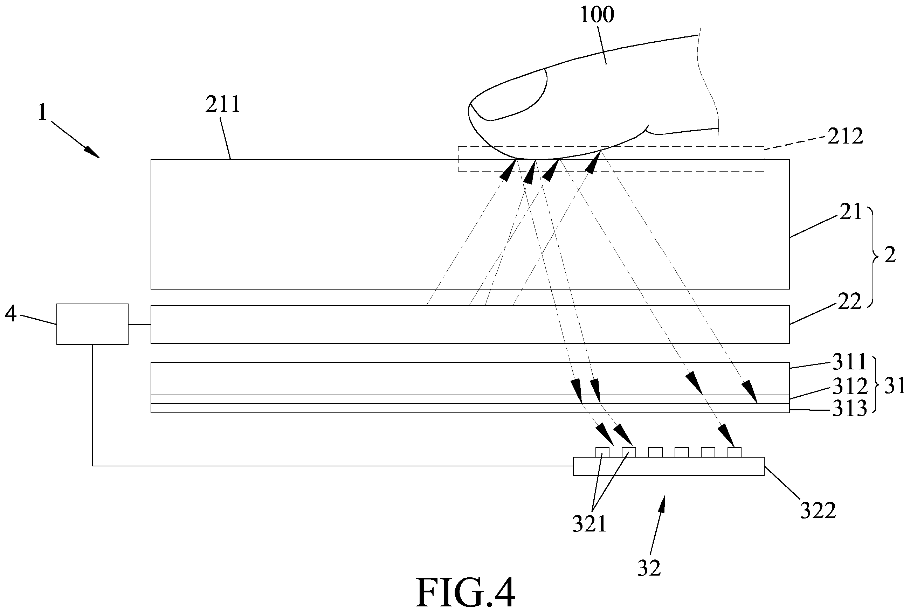

Referring to FIG. 4, a second embodiment of the under-display sensing device 1 is similar to the first example of an under-display device except that the second embodiment further includes a light converging film 313 disposed on the optical filter 312 opposite to the backlight unit 22. The light converging film 313 has an optical structure that can make the light entering therein refract and converge to a predetermined region so as to be accurately detected by the optical sensing unit 3. For example, the light converging film 313 may be constructed with stacked optical films having different refractive indices, thicknesses and position angles. Using the stacked optical films having different properties, the light incident on the light converging film 313 may refract and converge to the region where the optical sensing chips 321 is positioned, and thus more light may reach to the optical sensing unit 32. Since the structure of the light converging film 313 is well known to a person skilled in the art, a detailed description thereof is omitted herein for brevity.

It should be noted that the position of the light converging film 313 may be varied according to practical requirements, and is not limited to that disclosed in FIG. 4. For example, in certain embodiments, the optical filter 312 and the light converging film 313 may be disposed on opposite surfaces of the transparent substrate 311. In other embodiments, the light converging film 313 is disposed between the transparent substrate 311 and the optical filter 312. In other words, the light first converges and then is filtered. Alternatively, the transparent substrate 311 may be omitted, and the optical filter 312 and the light converging film 313 disposed thereon are formed between the backlight unit 22 and the optical sensing unit 32.

In yet other embodiments, the light converging film 313 is disposed on the transparent substrate 311, and the optical filter 312 is formed on and covers the optical sensing chips 321 of the optical sensing unit 32, which is similar to the second embodiment (see FIG. 3) .

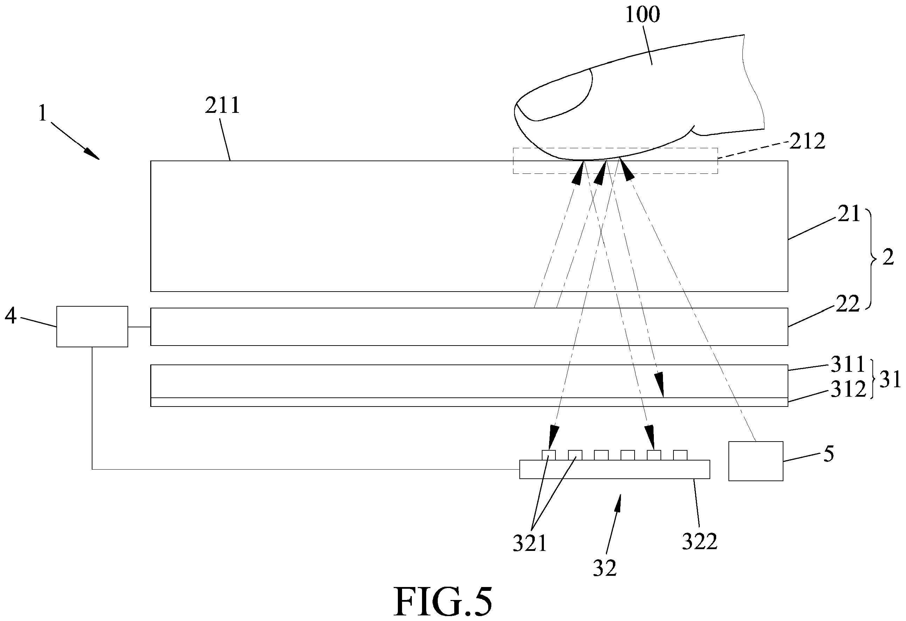

Referring to FIG. 5, a third embodiment of the under-display sensing device 1 is similar to the first example of an under-display sensing device except that the third embodiment further includes an auxiliary light source 5 for providing auxiliary light in a range of full wavelengths or specific wavelengths. As such, the auxiliary light source 5 and the backlight unit 22 both provide light for sensing such that more light may reach to the optical sensing unit 32. The sensitivity of the under-display sensing device 1 is thus improved.

To sum up, with the optical filter unit 31 disposed in front of the optical sensing unit 32, only filtered light with predetermined wavelengths from the optical filter unit 31 reaches to the optical sensing unit 32 for sensing, and thus the under-display sensing device 1 of this disclosure may have an improved sensitivity.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. An under-display sensing device (1) comprising:
a liquid crystal display, LCD, module (2) that includes an LCD unit (21) having a display surface (211) and a backlight unit (22) disposed at a side opposite to said display surface (211) for emitting a light;
an optical filter unit (31) that is disposed on said backlight unit (22) at a side opposite to said LCD unit (21) for filtering the light to obtain a filtered light having predetermined wavelengths; and
an optical sensing unit (32) that is disposed on said optical filter unit (31) at a side opposite to said backlight unit (22) for detecting the filtered light from said optical filter unit (31),
said optical filter unit (31) includes an optical filter (312) that is disposed between said backlight unit (22) and said optical sensing unit (32) for filtering the light, and
**characterized in that**:
said optical sensing unit (32) includes a plurality of optical sensing chips (321), and said optical filter (312) is formed on and covers said optical sensing chips (321) of said optical sensing unit (32).

2. The under-display sensing device (1) of claim 1, **characterized in that** said optical filter unit (31) further includes a transparent substrate (311) that is disposed under said backlight unit (22), and a light converging film (313) that is disposed on said transparent substrate (311).

3. The under-display sensing device (1) of claim 1 or 2, **characterized in that** said optical sensing chips (321) are one of a charge coupled device, CCD and a complementary metal-oxide semiconductor, CMOS.

4. The under-display sensing device (1) of any one of claims 1 to 3, **characterized in that** a projection of said optical filter unit (31) on said backlight unit (22) completely or partially covers said backlight unit (22).

5. The under-display sensing device (1) of any one of claims 1 to 3, **characterized in that** a projection of said optical sensing unit (32) on said backlight unit (22) falls within said backlight unit (22).

6. The under-display sensing device (1) of any one of claims 1 to 5, further **characterized by** an auxiliary light source (5) for providing auxiliary light.

7. The under-display sensing device (1) of any one of claims 1 to 6, further **characterized by** a circuit control module (4) communicatively connected to said optical sensing unit (32).

8. The under-display sensing device (1) of any one of claims 1 to 7, **characterized in that** said optical filter unit (31) has a transmittance of not lower than 60%.

## Patentansprüche

1. Sensorvorrichtung (1) unterhalb einer Anzeige, umfassend:
ein Flüssigkristallanzeige-, Liquid Crystal Display, LCD, Modul (2), das eine LCD-Einheit (21) mit einer Anzeigefläche (211) und eine Hintergrundbeleuchtungseinheit (22), die auf einer der Anzeigefläche (211) gegenüberliegenden Seite angeordnet ist, zum Emittieren eines Lichts einschließt;
eine optische Filtereinheit (31), die auf einer der LCD-Einheit (21) gegenüberliegenden Seite auf der Hintergrundbeleuchtungseinheit (22) angeordnet ist, zum Filtern des Lichts, um ein gefiltertes Licht mit vorbestimmten Wellenlängen zu erhalten; und
eine optische Sensoreinheit (32), die auf einer der Hintergrundbeleuchtungseinheit (22) gegenüberliegenden Seite auf der optischen Filtereinheit (31) angeordnet ist, zum Erfassen des gefilterten Lichts von der optischen Filtereinheit (31),
wobei die optische Filtereinheit (31) einen optischen Filter (312), der zwischen der Hintergrundbeleuchtungseinheit (22) und der optischen Sensoreinheit (32) angeordnet ist, zum Filtern des Lichts einschließt, und
**dadurch gekennzeichnet, dass**:
die optische Sensoreinheit (32) eine Vielzahl von optischen Sensorchips (321) einschließt, und der optische Filter (312) auf den optischen Sensorchips (321) der optischen Sensoreinheit (32) gebildet ist und diese bedeckt.

2. Sensorvorrichtung (1) unterhalb einer Anzeige nach Anspruch 1, **dadurch gekennzeichnet, dass** die optische Filtereinheit (31) weiter ein transparentes Substrat (311), das unterhalb der Hintergrundbeleuchtungseinheit (22) angeordnet ist, und einen Licht konvergierenden Film (313) einschließt, der auf dem transparenten Substrat (311) angeordnet ist.

3. Sensorvorrichtung (1) unterhalb einer Anzeige nach Anspruch 1 oder 2, **dadurch gekennzeichnet, dass** es sich bei den optischen Sensorchips (321) um eines handelt aus einer ladungsgekoppelten Vorrichtung, Charge Coupled Device, CCD, und einem komplementären Metall-Oxid-Halbleiter, Complementary Metal-Oxide Semiconductor, CMOS.

4. Sensorvorrichtung (1) unterhalb einer Anzeige nach einem der Ansprüche 1 bis 3, **dadurch gekennzeichnet, dass** eine Projektion der optischen Filtereinheit (31) auf die Hintergrundbeleuchtungseinheit (22) die Hintergrundbeleuchtungseinheit (22) vollständig oder teilweise bedeckt.

5. Sensorvorrichtung (1) unterhalb einer Anzeige nach einem der Ansprüche 1 bis 3, **dadurch gekennzeichnet, dass** eine Projektion der optischen Sensoreinheit (32) auf die Hintergrundbeleuchtungseinheit (22) innerhalb die Hintergrundbeleuchtungseinheit (22) fällt.

6. Sensorvorrichtung (1) unterhalb einer Anzeige nach einem der Ansprüche 1 bis 5, die weiter durch eine zusätzliche Lichtquelle (5) zum Bereitstellen von zusätzlichem Licht gekennzeichnet ist.

7. Sensorvorrichtung (1) unterhalb einer Anzeige nach einem der Ansprüche 1 bis 6, die weiter durch ein Schaltkreissteuerungsmodul (4) gekennzeichnet ist, welches kommunikationsmäßig mit der optischen Sensoreinheit (32) verbunden ist.

8. Sensorvorrichtung (1) unterhalb einer Anzeige nach einem der Ansprüche 1 bis 7, **dadurch gekennzeichnet, dass** die optische Filtereinheit (31) eine Lichtdurchlässigkeit von nicht kleiner als 60 % aufweist.

## Revendications

1. Dispositif de détection de sous-affichage (1) comprenant :
un module d'affichage à cristaux liquides, LCD (2) qui comprend une unité d'affichage à cristaux liquides (21) ayant une surface d'affichage (211) et une unité de rétroéclairage (22) disposée sur un côté opposé à ladite surface d'affichage (211) pour l'émission d'une lumière ;
une unité de filtre optique (31) qui est disposée sur ladite unité de rétroéclairage (22) sur un côté opposé à ladite unité d'affichage à cristaux liquides (21) pour le filtrage de la lumière afin d'obtenir une lumière filtrée ayant des longueurs d'onde prédéterminées ; et
une unité de détection optique (32) qui est disposée sur ladite unité de filtre optique (31) sur un côté opposé à ladite unité de rétroéclairage (22) pour la détection de la lumière filtrée provenant de ladite unité de filtre optique (31),
ladite unité de filtre optique (31) comprend un filtre optique (312) qui est disposé entre ladite unité de rétroéclairage (22) et ladite unité de détection optique (32) pour le filtrage de la lumière, et
**caractérisé en ce que** :
ladite unité de détection optique (32) comprend une pluralité de puces de détection optique (321), et ledit filtre optique (312) est formé sur lesdites puces de détection optique (321) de ladite unité de détection optique (32) et recouvre celles-ci.

2. Dispositif de détection de sous-affichage (1) selon la revendication 1, **caractérisé en ce que** ladite unité de filtre optique (31) comprend en outre un substrat transparent (311) qui est disposé sous ladite unité de rétroéclairage (22), et un film de convergence de lumière (313) qui est disposé sur ledit substrat transparent (311).

3. Dispositif de détection de sous-affichage (1) selon la revendication 1 ou 2, **caractérisé en ce que** lesdites puces de détection optique (321) sont un parmi un dispositif à couplage de charge, CCD, et un semi-conducteur à oxyde de métal complémentaire, CMOS.

4. Dispositif de détection de sous-affichage (1) selon l'une quelconque des revendications 1 à 3, **caractérisé en ce qu'**une projection de ladite unité de filtre optique (31) sur ladite unité de rétroéclairage (22) recouvre de manière complète ou partielle ladite unité de rétroéclairage (22).

5. Dispositif de détection de sous-affichage (1) selon l'une quelconque des revendications 1 à 3, **caractérisé en ce qu'**une projection de ladite unité de détection optique (32) sur ladite unité de rétroéclairage (22) se situe dans ladite unité de rétroéclairage (22).

6. Dispositif de détection de sous-affichage (1) selon l'une quelconque des revendications 1 à 5, **caractérisé en outre par** une source de lumière auxiliaire (5) pour la fourniture d'une lumière auxiliaire.

7. Dispositif de détection de sous-affichage (1) selon l'une quelconque des revendications 1 à 6, **caractérisé en outre par** un module de commande de circuit (4) relié en communication à ladite unité de détection optique (32).

8. Dispositif de détection de sous-affichage (1) selon l'une quelconque des revendications 1 à 7, **caractérisé en ce que** ladite unité de filtre optique (31) a une transmittance non inférieure à 60 %.
